# FASCICULE DE BREVET EUROPEEN

(11) **EP 1 283 737 B1**
(45) Date de publication et mention de la délivrance du brevet: **29.11.2006**
(21) Numéro de dépôt: 01931794.0
(22) Date de dépôt: 04.05.2001
(51) Int. Cl.: B01D 29/15, B01D 29/44

(54) **PROCEDE DE FABRICATION D'UN PANIER MECANIQUE DE FILTRATION**
VERFAHREN ZUR HERSTELLUNG VON MECHANISCHEN SIEBKÖRBEN
METHOD FOR MAKING A MECHANICAL SIEVE BASKET

(30) Priorité: 16.05.2000 FR 0006222
(43) Date de publication de la demande: 19.02.2003
(73) Titulaire: Johnson Filtration Systems S.A., 86530 Availles en Chatellerault (FR)
(72) Inventeur: REIG, Rapha¬l, F-86000 Poitiers (FR)
(74) Mandataire: Prugneau, Philippe
(86) Numéro de dépôt international: PCT/FR2001/001363
(87) Numéro de publication internationale: WO 2001/087457

(56) Documents cités:
- WO-A-97/20104
- WO-A-99/22064
- US-A- 4 828 689
- US-A- 4 846 971
- US-A- 5 791 495

## Description

L'invention concerne un procédé de fabrication d'un panier mécanique cylindrique de filtration à débit centripète ou centrifuge, comprenant des anneaux métalliques coaxiaux espacés le long d'un axe du panier et des fils régulièrement espacés entre eux et disposés à la périphérie des anneaux pour former un tamis cylindrique.

Un tel panier est généralement utilisé pour filtrer un produit initial par passage au travers du tamis formé par les fils régulièrement espacés de manière à dissocier le produit initial en un premier produit de consistance épaisse, qui n'a pu traverser le tamis, et un second produit de consistance plus fluide, qui a traversé le tamis. Ainsi, le passage du produit initial, situé à l'intérieur du panier, au travers du tamis peut par exemple être provoqué par effet centrifuge en faisant tourner le panier autour de son axe avec un mouvement de rotation continu ou oscillatoire, ou par l'action d'un rotor placé à l'intérieur du panier, de manière à récupérer en fin d'opération le premier produit à l'intérieur du panier, et le second produit à l'extérieur du panier.

Un tel panier est par exemple couramment utilisé dans l'industrie papetière, pour filtrer la pâte à papier, mais son utilisation qui est plus générale peut s'appliquer à d'autres types de produits que l'on souhaite filtrer.

Dans l'art antérieur concernant la fabrication de tels paniers, on réalise en général dans une première opération un tamis plan qui est constitué de barres positionnées horizontalement sur lesquelles sont par exemple soudés par résistance électrique, ou encore frettés, des fils positionnés verticalement, puis, dans une seconde opération, ce tamis est cintré, et les extrémités des barres sont soudées de manière à former le tamis cylindrique.

Les défauts d'une telle solution résident non seulement dans l'opération de roulage qui d'une part génère des contraintes internes dans le panier tendant à réduire sa durée de vie et d'autre part représente un surcoût de fabrication, mais aussi dans des problèmes de durée de vie des soudures.

Ainsi, la durée de vie des paniers actuels est relativement faible, pour un coût de fabrication relativement élevé.

Le but de l'invention est de remédier à ces inconvénients.

A cet effet, l'invention a pour objet un procédé de fabrication d'un panier mécanique cylindrique de filtration à débit centripète ou centrifuge, comprenant des anneaux métalliques coaxiaux espacés le long d'un axe du panier et des fils régulièrement espacés entre eux et disposés à la périphérie des anneaux pour former un tamis cylindrique caractérisé en ce qu'il consiste à :
a) fournir des anneaux profilés ayant chacun une âme annulaire, une couronne annulaire de plus petite épaisseur que l'âme annulaire, au moins un épaulement annulaire entre la couronne annulaire et l'âme annulaire, et des encoches espacées régulièrement sur la couronne ;
b) mettre en position des fils dans les encoches des anneaux en les disposant régulièrement espacés entre eux ;
c) déplacer le long de l'épaulement de chaque anneau une source de chaleur à une température suffisante pour faire fondre l'épaulement de telle manière que le métal en fusion provenant de l'épaulement réalise une soudure de chaque fil avec l'anneau sans métal d'apport extérieur.

Avec un tel procédé de fabrication, la qualité des soudures entre les fils et les anneaux est améliorée, si bien que le panier a une meilleure résistance mécanique, ce qui augmente sa durée de vie, et son coût de fabrication est inférieur au coût de fabrication d'un panier classique.

Dans des modes de mise en oeuvre particuliers du procédé selon l'invention, on fournira un anneau ayant une couronne d'épaisseur suffisamment faible de manière à faciliter l'usinage des encoches destinées à recevoir les fils, et une âme d'épaisseur suffisamment élevée pour résister par exemple aux efforts radiaux générés par l'opération de filtrage. D'autre part, on pourra aussi fournir des fils ayant une section particulière comprenant part exemple un pied, de forme complémentaire des encoches pour interdire une rotation du fil par rapport à l'anneau lors de la mise en position et pour améliorer encore la qualité de la soudure entre les anneaux et les fils de manière à augmenter encore la durée de vie du panier.

Enfin, la réalisation d'une première soudure sur la face supérieure de chaque anneau et d'une seconde soudure sur la face inférieure de chaque anneau augmentera encore la résistance mécanique de la liaison entre les fils et les anneaux.

L'invention sera maintenant décrite plus en détail, et en référence aux dessins annexés qui en illustrent une forme de réalisation à titre d'exemple non limitatif.

La figure 1 est une vue d'ensemble d'un panier comprenant un tamis de forme sensiblement cylindrique obtenu par le procédé selon l'invention.

La figure 2 est une vue en coupe d'un anneau avec un fil en arrière plan, non soudé du panier de la figure 1.

La figure 3 est une vue de dessus partielle d'un anneau et d'un fil non soudé.

La figure 4 est une vue en coupe d'un anneau avec un fil représenté en arrière plan qui est soudé sur l'anneau au niveau de la face supérieure de l'anneau.

La figure 5 est une autre vue en coupe d'un autre anneau avec un fil représenté en arrière plan qui est soudé sur l'anneau au niveau de la face supérieure de l'anneau et de la face inférieure de l'anneau.

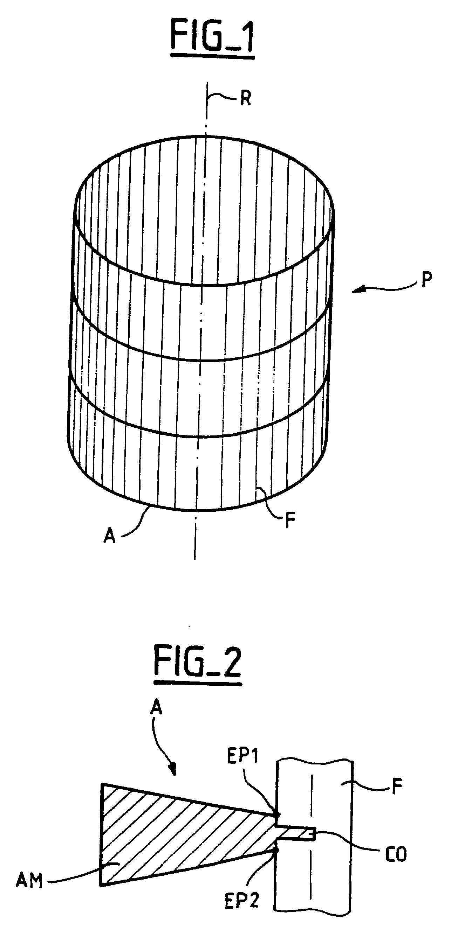

Dans la figure 1, on a représenté schématiquement en perspective un panier P qui peut être fabriqué avec le procédé selon l'invention. Ce panier a une forme cylindrique par rapport à un axe R qui pourra être un axe de rotation du panier lors de son utilisation. Plus particulièrement, ce panier est constitué d'anneaux A coaxiaux à l'axe R qui sont régulièrement espacés le long de cet axe. Des fils F sont disposés parallèlement à l'axe R et rigidement liés aux anneaux tout en étant régulièrement espacés entre eux le long de la périphérie de ces anneaux. Ces fils F pourraient aussi être disposés en hélice à la périphérie des anneaux A. Le cylindre constitue un tamis permettant d'effectuer des opérations de filtration dans lesquelles un produit initial pourra être séparé en un premier produit de consistance épaisse et un second produit de consistance plus fluide par filtration à travers le tamis.

Dans la figure 2, on a représenté un anneau profilé A vu dans un plan de coupe en arrière duquel se situe un fil F positionné verticalement. Il est important de noter que dans cette figure, le fil F est simplement encastré dans une encoche et n'a pas encore été soudé à l'anneau A. Plus particulièrement, cette vue en coupe fait apparaître une première zone AM dite âme de forte épaisseur de l'anneau A, qui est solidaire d'une seconde zone CO dite couronne de plus faible épaisseur que celle de l'âme, dans laquelle est encastré le fil F. L'âme AM et la couronne CO forment une seule et même pièce, l'âme AM ayant en section transversale une épaisseur qui diminue selon une direction radiale en allant vers la couronne CO. La couronne CO peut avoir en section transversale une épaisseur constante. L'âme AM qui est annulaire a une forte épaisseur, de manière à résister par exemple aux efforts centripètes générés par la rotation du panier autour de son axe R, et la couronne CO qui est annulaire a une faible épaisseur de manière à faciliter l'usinage des encoches qui sont destinées à recevoir les fils F. Enfin, entre l'âme AM et la couronne CO, on trouve un premier épaulement annulaire EP1 qui est situé sur la face supérieure de l'anneau entre l'âme AM et la couronne CO, ainsi qu'un second épaulement annulaire EP2, symétrique de EP1 par rapport à un plan horizontal, situé sur la face inférieure de l'anneau A.

L'anneau profilé A qui a été représenté a sa couronne disposée sur son périmètre intérieur, et son âme vers l'extérieur de manière à ce que les fils soient disposés du côté intérieur du panier, mais on pourra aussi bien utiliser le procédé selon l'invention pour un anneau ayant sa couronne disposée sur son périmètre extérieur de manière à ce que les fils soient disposés du coté extérieur du panier cylindrique.

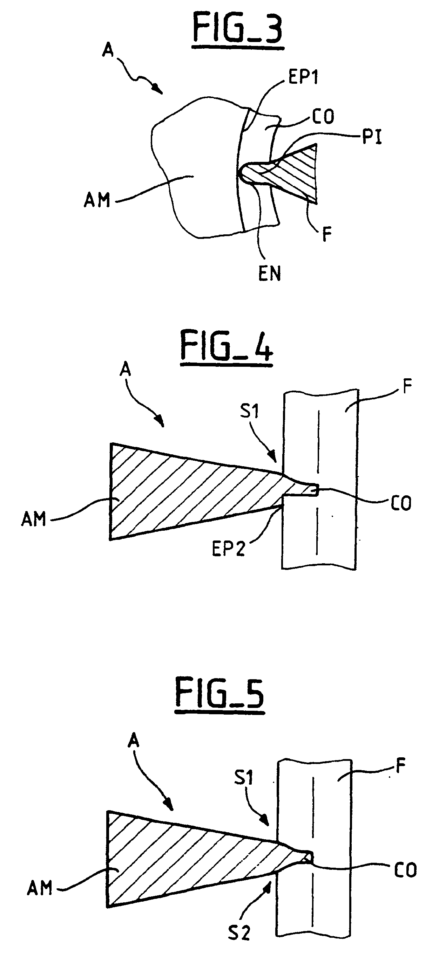

Dans la figure 3 on a représenté une portion d'anneau A en vue de dessus, ainsi qu'un fil F encastré dans une encoche EN correspondante F, vu en coupe. Il importe de noter que dans cette figure, le fil F est simplement encastré dans l'encoche EN et n'a pas encore été soudé à l'anneau. De même que pour la figure précédente, on voit apparaître l'anneau avec son âme annulaire AM, son épaulement annulaire EP1, et sa couronne annulaire CO.

Plus particulièrement, cette vue fait apparaître l'encoche EN dans laquelle est encastrée une partie de la section transversale du fil F ainsi que la forme de la section transversale du fil F. Cette section transversale du fil F comprend un pied PI qui est encastré dans l'encoche EN qui a une forme correspondante, ce qui présente l'avantage de positionner le fil F et de lui interdire toute rotation dans une encoche par rapport à l'anneau A au cours de l'opération de soudage. D'autre part, lorsque le panier est en rotation autour de l'axe R et en train de filtrer un produit, des efforts sont appliqués par le produit à filtrer sur le fil F, selon une direction tangente au périmètre interne de l'anneau, et ces efforts tendent notamment à désolidariser les fils F des anneaux A. En utilisant un fil F comportant un pied PI, on augmente la surface de contact du fil avec l'anneau, et donc la surface de contact du fil avec la soudure, ce qui a pour effet d'augmenter la résistance mécanique de la soudure du fil F sur l'anneau A. De plus l'utilisation d'un tel fil, comportant un pied PI facilite l'opération de mise en position des fils sur les anneaux qui précède l'opération de soudage, et tolère de légères irrégularités de forme.

Enfin, l'usinage de l'encoche EN pourra être réalisée par fraisage, par électro-érosion, ou par tout autre procédé d'usinage.

Dans la figure 4, on a représenté un anneau profilé A vu dans un plan de coupe en arrière duquel se situe un fil F positionné verticalement. Dans cette figure, le fil F est soudé à l'anneau A par la soudure S1. Plus particulièrement, cette soudure S1 a été réalisée par fusion de l'épaulement EP1 qui apparaissait dans la figure 2, sans métal d'apport extérieur. De cette façon, la soudure S1 est réalisée avec le procédé selon l'invention par déplacement continu d'un source de chaleur très ponctuelle telle que TIG, ou encore Laser, le long de l'épaulement annulaire EP1, pour souder tous les fils à un même anneau A, au cours d'une opération de soudage. Ainsi, le métal en fusion se répand autour du pied de chaque fil et réalise une soudure ayant des qualités mécaniques optimales.

Dans cette figure, le fil a été soudé seulement au niveau de la face supérieure de l'anneau si bien que l'épaulement annulaire EP2 est resté intact.

Dans la figure 5, on a représenté un anneau A et un fil F, de la même façon que dans la figure 4. Ici, le fil est soudé à l'anneau A par une soudure S1 au niveau de sa face supérieure, et par une soudure S2 au niveau de sa face inférieure. De même que pour la soudure S1, la soudure S2 a été obtenue par fusion de l'épaulement EP2, selon le même procédé.

L'avantage de cette seconde soudure S2 est qu'elle permet d'améliorer encore la qualité de la liaison mécanique entre les fils F et les anneaux A, ce qui permet d'augmenter encore la résistance mécanique du panier, pour que sa durée de vie soit encore supérieure.

## Revendications

1. Procédé de fabrication d'un panier mécanique (P) cylindrique de filtration à débit centripète ou centrifuge, comprenant des anneaux métalliques (A) coaxiaux espacés le long d'un axe (R) du panier et des fils (F) régulièrement espacés entre eux et disposés à la périphérie des anneaux (A) pour former un tamis cylindrique **caractérisé en ce qu'**il consiste à :
a) fournir des anneaux (A) profilés ayant chacun une âme annulaire (AM), une couronne annulaire (CO) de plus petite épaisseur que l'âme annulaire, au moins un épaulement annulaire (EP1) entre la couronne annulaire et l'âme annulaire, et des encoches (EN) espacées régulièrement sur la couronne ;
b) mettre en position des fils (F) dans les encoches (EN) des anneaux en les disposant régulièrement espacés entre eux ;
c) déplacer le long de l'épaulement (EP1) de chaque anneau une source de chaleur à une température suffisante pour faire fondre l'épaulement (EP1) de telle manière que le métal en fusion provenant de l'épaulement réalise une soudure (S1) de chaque fil avec l'anneau sans métal d'apport extérieur.

2. Le procédé selon la revendication 1 dans lequel on fournit des anneaux (A) profilés ayant chacun une face supérieure avec un premier épaulement annulaire (EP1) et une face inférieure avec un second épaulement annulaire (EP2) et dans lequel on déplace le long des deux épaulement ladite source de chaleur pour souder chaque fil aux deux faces de l'anneau.

3. Le procédé de fabrication selon la revendication 1, ou 2, dans lequel on met en position des fils (F) ayant chacun une section transversale formant un pied (PI), qui s'insèrent dans des encoches correspondantes des anneaux (A).

## Claims

1. A method of manufacturing a cylindrical mechanical filter basket (P) for centripetal or centrifugal flow, the basket comprising metal rings (A) spaced apart along an axis (R) of the basket and wires (F) regularly spaced apart from one another and disposed around the periphery of the rings (A) to form a cylindrical sieve, the method being **characterized in that** it consists in:
a) providing shaped rings (A) each having an annular core (AM), an annular rim (CO) of smaller thickness than the annular core, at least one annular shoulder (EP1) between the annular rim and the annular core, and notches (EN) regularly spaced apart in the rim;
b) placing wires (F) in the notches (EN) of the shaped rings so that the wires are disposed regularly spaced apart one another around the rings; and
c) moving a heat source along the shoulder (EP1) of each ring, the source being at a temperature that is high enough to melt the shoulder (EP1) so that the molten metal from the shoulder provides a weld (S1) between each wire and the ring without any external filler metal.

2. The method of claim 1, wherein each shaped ring (A) has a top face with a first annular shoulder (EP1) and a bottom face with a second annular shoulder (EP2), and wherein said heat source is moved along both shoulders in order to weld each wire to both faces of the ring.

3. The method of manufacture of claim 1 or claim 2, wherein each wire (F) has a cross-section that includes a root-forming portion (PI) which is inserted into corresponding notches of the rings (A).

## Patentansprüche

1. Fertigungsverfahren für einen mechanischen, zylindrischen Filterkorb (P) mit zentripetalem oder zentrifugalem Durchlass, mit koaxial entlang einer Achse (R) des Filterkorbs angeordneten metallischen Ringen (A) und in regelmäßigem Abstand zueinander am Umfang dieser Ringe (A) angeordneten Drähten (F), um ein zylindrisches Sieb zu bilden, **dadurch gekennzeichnet, dass** es umfasst:
a) Bereitstellen von profilierten Ringen (A), jeweils bestehend aus einem ringförmigen Kern (AM), einer ringförmigen Krone (CO), deren Durchmesser kleiner als der ringförmige Kern ist, und mindestens einem, zwischen der ringförmigen Krone und dem ringförmigen Kern angeordneten, ringförmigen Bund (EP1), und den im regelmäßigen Abstand zueinander auf der Krone angeordneten Aussparungen (EN);
b) Positionieren der Drähte (F) in regelmäßigem Abstand zueinander in den Aussparungen (EN) der Ringe;
c) Verfahren einer Wärmequelle mit einer ausreichend hohen Temperatur entlang des Bundes (EP1) eines jeden Ringes, um den Bund (EP1) so zum Schmelzen zu bringen, dass das aus dem Bund abschmelzende Metall ein Verschweißen (S1) eines jeden Drahtes mit dem Ring ohne Auftragen eines Schweißzusatzwerkstoffs von Außen bewirkt.

2. Verfahren gemäß Anspruch 1, in dem Profilringe (A) bereitgestellt werden, deren obere Fläche jeweils mit einem ersten, ringförmigen Bund (EP1) und deren untere Fläche mit einem zweiten, ringförmigen Bund (EP2) ausgebildet sind und in dem besagte Wärmequelle entlang der beiden Bünde verfährt, um jeden Draht an die beiden Ringflächen zu schweißen.

3. Fertigungsverfahren gemäß einem der Ansprüche 1 oder 2, in dem die Drähte (F), deren Querschnitte jeweils einen Fuß (PI) bilden, so positioniert werden, dass sie sich in die entsprechenden Aussparungen der Ringe (A) einfügen.
